# FASCICULE DE BREVET EUROPEEN

(11) **EP 2 210 161 B1**
(45) Date de publication et mention de la délivrance du brevet: **06.06.2012**
(21) Numéro de dépôt: 08836803.0
(22) Date de dépôt: 06.10.2008
(51) Int. Cl.: G06F 3/01, G06F 3/041, G06F 3/16

(54) **PROCÉDÉ DE COMMANDE D'UN DISPOSITIF DE COMMANDE À SURFACE TACTILE ET DISPOSITIF DE COMMANDE ÉLECTRIQUE À SURFACE TACTILE COMPORTANT DES MOYENS DE MISE EN OEUVRE DUDIT PROCÉDÉ**
VERFAHREN ZUR STEUERUNG EINER BERÜHRUNGSOBERFLÄCHENSTEUERUNG UND ELEKTRISCHE BERÜHRUNGSOBERFLÄCHENSTEUERUNG MIT MITTEL ZUR UMSETZUNG DIESES VERFAHRENS
METHOD FOR CONTROLLING A TOUCH SURFACE CONTROL DEVICE AND ELECTRIC TOUCH SURFACE CONTROL DEVICE INCLUDING MEANS FOR IMPLEMENTING SAID METHOD

(30) Priorité: 08.10.2007 FR 0707055
(43) Date de publication de la demande: 28.07.2010
(73) Titulaire: DAV, 94000 Creteil (FR)
(72) Inventeur: LAURENT, Patrice, F-74106 Annemasse (FR); DUNOYER, Aymeric, F-74106 Annemasse (FR); COTTAREL, Bruno, F-74106 Annemasse (FR); BARATHON, Philippe, F-74106 Annemasse (FR)
(74) Mandataire: Croonenbroek, Thomas Jakob
(86) Numéro de dépôt international: PCT/EP2008/063357
(87) Numéro de publication internationale: WO 2009/047235

(56) Documents cités:
- EP-A- 1 241 558
- EP-A- 1 748 350
- FR-A- 2 847 527
- GB-A- 2 402 105
- US-A1- 2006 031 765
- US-B1- 6 340 936

## Description

La présente invention concerne un procédé de commande à surface tactile comportant une étape dans laquelle on génère un retour sensitif correspondant à une détection d'un appui par un utilisateur sur la surface tactile.

L'invention concerne également un dispositif de commande électrique à surface tactile comportant des moyens de mise en oeuvre d'une commande d'un tel procédé, pour par exemple, une commande d'organe électrique ou électronique de véhicule automobile.

Les dispositifs de commande à surface tactile permettent de détecter un appui du doigt d'un utilisateur et, en fonction de l'effort exercé sur la surface et/ou de la position de l'appui détecté et/ou du déplacement ultérieur de cet appui sur la surface, de déclencher un type particulier d'action ou de commande d'organe.

On connaît par exemple, des dispositifs de commande comportant un capteur dont la surface tactile est sensible à une variation de pression tactile, tel qu'un capteur utilisant des résistances sensibles à la pression (également connu sous le nom de capteur FSR pour « Force Sensing Resistor »).

De tels capteurs sont par exemple connus sous le nom de « tablette digitalisante » (dénomination anglaise "Digitizer pad") et on cite comme art antérieur les documents suivants : US 4,810,992, US 5,008,497, FR 2683649 ou encore EP 0 541 102.

Ces capteurs comprennent une surface tactile comportant des couches semiconductrices prises en sandwich entre par exemple une couche conductrice et une couche résistive.

En exerçant une pression sur la surface tactile, la résistance ohmique de la surface tactile diminue permettant ainsi, par application d'une tension adaptée, de mesurer la pression appliquée et/ou la localisation de l'endroit où la pression est exercée.

On connaît également des dispositifs de commande de ce type, par exemple des documents EP 1748 350, FR 2 847527, EP 1 241 558, US 6 340 936, GB 2 402 105 ou US 2006/031765 comportant des moyens pour générer un retour d'information sensitif, tel qu'une vibration et/ou un son, afin de signaler à l'utilisateur que la détection a été faite et la commutation réalisée.

Toutefois, il peut arriver que le retour sensitif soit mal perçu ou soit mal interprété par l'utilisateur. Celui-ci n'est alors plus certain de savoir si sa commande a bien été prise en compte, ni à quelle action est associée le retour sensitif.

La cause de ce défaut n'était pas connue et restait inexpliquée.

Les inventeurs ont alors analysé les procédés de l'art antérieur en détail et ont constaté de façon surprenante, qu'il existe un décalage d'environ dix millisecondes entre le moment où l'on souhaite générer un retour haptique et le moment où, par exemple la vibration correspondante, est perçue par l'utilisateur.

Le but de la présente invention est donc de proposer un procédé et un dispositif de commande électrique améliorant le ressenti de l'utilisateur, lui permettant ainsi de mieux discerner ce à quoi correspond le retour sensitif.

A cet effet, l'invention a pour objet un procédé de commande d'un dispositif de commande à surface tactile comprenant au moins une étape dans laquelle on génère un retour sensitif qui correspond à une détection d'un appui par un utilisateur sur la surface tactile et qui comporte un retour haptique et un retour acoustique, caractérisé en ce qu'on débute la génération du retour acoustique après celle du retour haptique, à partir du moment où une valeur caractéristique du retour haptique a franchi un seuil prédéfini.

L'invention a aussi pour objet un dispositif de commande électrique à surface tactile, caractérisé en ce qu'il comporte des moyens de mise en oeuvre dudit procédé.

D'autres avantages et caractéristiques apparaîtront à la lecture de la description de l'invention, ainsi que des dessins annexés sur lesquels :
- la figure 1 est un organigramme illustrant différentes étapes du procédé selon un mode particulier de réalisation de l'invention,
- la figure 2 est un organigramme illustrant un deuxième mode de réalisation du procédé de l'invention,
- les figures 3 et 4 représentent deux diagrammes de l'évolution de paramètres caractéristiques d'un dispositif de commande selon l'invention en fonction du temps, au cours d'une étape de détection dudit procédé.
Sur ces figures, les éléments identiques portent les mêmes numéros de référence.

Par souci de clarté, les étapes du procédé sont numérotées 1 à 16 et les éléments des diagrammes sont numérotés à partir de 100.

Le procédé de commande selon l'invention est apte à commander par exemple un dispositif de commande d'un mécanisme motorisé (non représenté) d'ouverture et/ou de fermeture d'un ouvrant, tel qu'une vitre d'un véhicule automobile, un toit ouvrant ou encore le coffre / hayon / porte coulissante motorisé d'un véhicule, ou un organe électronique pour un écran multimédia ou un système de climatisation.

Bien entendu, ce procédé peut être adapté à toute autre commande électrique.

Le procédé de commande comporte au moins une étape dans laquelle on génère un retour sensitif qui correspond à une détection d'un appui par un utilisateur sur la surface tactile.

Le retour sensitif comporte un retour haptique, tel qu'un retour de type vibratoire, de type cloquant ou de type bouton-poussoir, et un retour acoustique.

Selon l'invention, on débute la génération du retour acoustique après celle du retour haptique, à partir du moment où une valeur caractéristique du retour haptique a franchi un seuil prédéfini, de manière à ce que le retour haptique et le retour acoustique soient perçus sensiblement simultanément par l'utilisateur.

De préférence, le seuil prédéfini à franchir est une fraction de l'amplitude ou de la durée totale du retour haptique.

Ainsi, en décalant temporellement la génération du retour acoustique et celle du retour haptique, on obtient un retour sensitif dans lequel la perception des retours haptique et acoustique est simultanée, ce qui permet d'améliorer le contenu du retour d'information de la commande.

Par exemple, si le retour haptique est généré pendant une durée D, on débute la génération du retour acoustique à partir d'une durée sensiblement comprise entre 0,4*D à 0,7*D, de préférence 0,5*D.

De préférence, on décale la génération du retour acoustique de sorte que l'amplitude maximale du retour haptique coïncide avec l'amplitude maximale du retour acoustique.

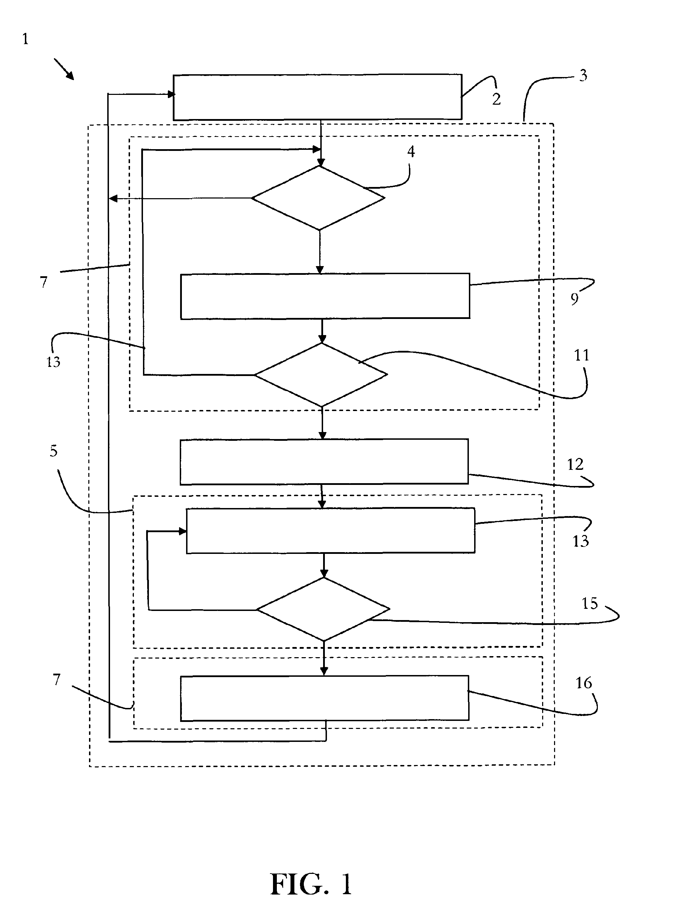

Avantageusement, et comme représenté sur la figure 1, le procédé de commande 1 comporte une étape initiale de veille 2 où le dispositif de commande est placé en état de veille.

Le procédé 1 comporte en outre une étape de détection 3 dans laquelle on détecte un appui sur la surface tactile du dispositif de commande (losange 4).

Puis, lorsqu'un appui a été détecté sur la surface tactile, on contrôle la valeur d'au moins un paramètre caractéristique de l'appui détecté (rectangle 9) et, on la compare à au moins une valeur de référence prédéfinie.

Par exemple, on le compare à un ensemble de valeurs de références prédéfinies (losange 11).

Si la valeur du paramètre est comprise dans cet ensemble de valeurs de références prédéfinies ou, si la valeur du paramètre est égale ou supérieure à la valeur de référence, alors on génère un premier retour sensitif (rectangle 12) et on place le dispositif de commande dans un état d'appui actif 5, puis on actionne la commande spécifiée.

En revanche, si la valeur du paramètre est inférieure à la valeur de référence, alors on teste à nouveau si un appui est détecté sur la surface tactile de commande (losange 4).

Si un appui est toujours détecté alors on réitère le procédé en contrôlant à nouveau la valeur d'au moins un paramètre caractéristique de l'appui détecté (rectangle 9) et ainsi de suite.

Si par contre, l'appui n'est plus détecté, alors le dispositif retourne à l'état de veille (rectangle 2).

Avantageusement, dans l'étape de détection 3 pour laquelle le dispositif de commande est placé dans un état d'appui actif 5, on contrôle la valeur d'au moins un paramètre caractéristique de l'appui détecté (rectangle 13) et on la compare à une valeur de référence prédéfinie (losange 15) ou à un ensemble de valeurs de références prédéfinies.

Lorsque la valeur du paramètre est inférieure à la valeur de référence prédéfinie ou lorsque la valeur du paramètre est en-dehors de l'ensemble de valeurs de références prédéfinies, on génère un deuxième retour sensitif (rectangle 16) et on place le dispositif de commande dans un état d'appui inactif (7) et dans l'étape initiale de veille 2.

La variation de la valeur du paramètre caractéristique n'est pas prise en compte tant qu'elle n'est pas inférieure à la valeur de référence prédéfinie ou en-dehors de l'ensemble de valeurs de références prédéfinies.

Le retour à l'état d'appui inactif 7 permet au procédé 1 de prendre en compte une nouvelle commande de l'utilisateur.

Ainsi, le procédé 1 permet d'une part, de certifier que l'appui détecté doit être pris en compte et d'autre part, d'informer l'utilisateur précisément du début et de la fin de la prise en compte de cette commande, sécurisant sa mise en oeuvre.

De la sorte, le procédé permet d'éviter que la surface tactile du dispositif ne détecte un appui involontaire et active une commande non souhaitée par l'utilisateur, provenant par exemple d'un contact intempestif de la surface tactile.

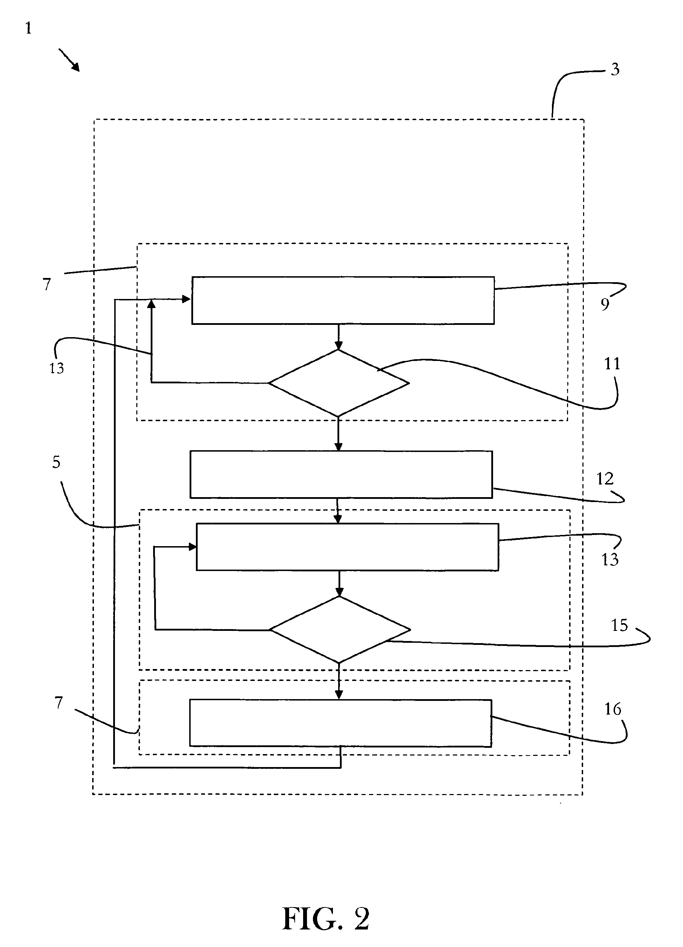

Selon un second mode de réalisation du procédé et tel qu'illustré sur la figure 2, le procédé comporte une étape de détection 3 dans laquelle on contrôle directement la valeur d'au moins un paramètre caractéristique d'un appui (rectangle 9), puis on la compare à une valeur de référence prédéfinie (losange 11) ou à un ensemble de valeurs prédéfinies.

Si la valeur du paramètre est égale ou supérieure à ladite valeur de référence ou comprise dans l'ensemble de valeurs prédéfinies, alors on place le dispositif de commande dans un état d'appui actif 5 et on génère un premier retour sensitif (rectangle 12).

Sinon, on contrôle à nouveau la valeur d'au moins un paramètre caractéristique d'un appui (rectangle 9).

Les autres étapes du procédé sont similaires à celles du procédé illustré en figure 1.

De manière avantageuse, le paramètre caractéristique est la force mesurée de l'appui détecté.

De préférence, la valeur de référence prédéfinie de la force de l'appui permettant le passage à l'état d'appui actif 5 est supérieure ou égale à la valeur de référence prédéfinie de la force de l'appui permettant le passage à l'état d'appui inactif 7.

On peut prévoir également que le paramètre caractéristique est la durée D mesurée de l'appui détecté.

Avantageusement, l'ensemble de valeurs de référence prédéfinies comprend au moins une force d'appui prédéfinie, une durée d'appui prédéfinie ou une surface de position prédéfinie de l'appui détecté.

Dans le cas d'un commutateur électrique de type bouton-poussoir, le retour acoustique peut évoquer le bruit de l'actionnement d'un bouton-poussoir mécanique.

Le retour acoustique peut en outre être représentatif de la fonction commandée.

On peut aussi envisager que le premier et le deuxième retour haptiques soient identiques.

Alternativement, on prévoit un premier retour sensitif dans lequel le décalage temporel entre le retour acoustique et le retour haptique est plus grand que pour le deuxième retour sensitif.

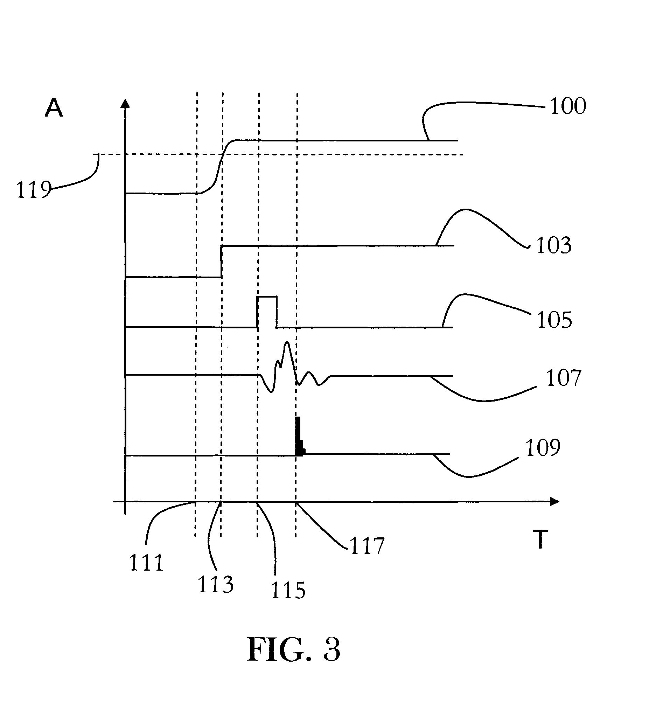

Les graphiques 3 et 4 illustrent, un exemple de mise en oeuvre du procédé 1 tel que précédemment décrit avec en figure 3, la représentation d'une étape de détection 3 dans laquelle le dispositif de commande bascule de l'état d'appui inactif 7 à l'état d'appui actif 5.

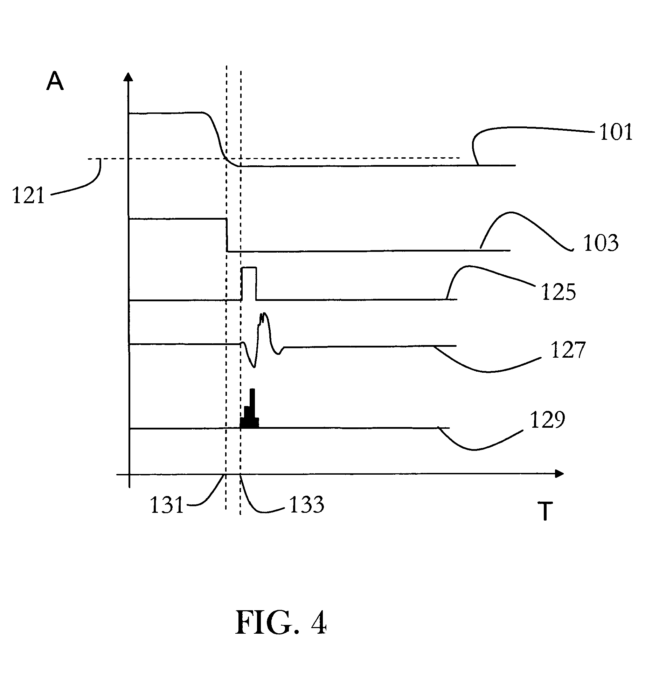

A l'inverse, sur la figure 4, le dispositif de commande bascule de l'état d'appui actif 5 à l'état d'appui inactif 7.

Le graphique de la figure 3 comporte en ordonnée les amplitudes A des signaux de paramètres du dispositif de commande et en abscisse, le temps T.

Dans cet exemple, le basculement à l'état d'appui actif 5 a lieu lorsque la mesure de la force de l'appui détecté devient supérieure ou égale à une valeur de référence.

On distingue sur le graphique, la courbe 100 représentant la force de l'appui au cours du temps.

A l'instant 111, la courbe 100 commence à évoluer, ce qui signale la présence d'un appui. Lorsque la valeur de la force est supérieure à la valeur prédéfinie d'amplitude 119, c'est-à-dire à l'instant 113, le dispositif de commande bascule à l'état d'appui actif 5.

La courbe 103 schématise l'état de l'appui détecté. A partir de l'instant 113, la courbe 103 indique l'état d'appui actif 5.

Suite à cela, une commande peut être prise en compte et actionnée et un premier retour sensitif est envoyé à partir de l'instant 115 à l'utilisateur.

Le premier retour sensitif de l'exemple de ce graphique, comporte un retour haptique de type vibratoire et un retour acoustique.

Ce retour sensitif est schématisé par les courbes 105, 107 et 109 de la figure 3.

La courbe 105 représente la consigne d'actionnement d'un vibreur et la courbe 107, l'accélération de la surface tactile, représentative du retour vibratoire perçu par l'utilisateur.

La consigne d'actionnement de la vibration est activée en décalé au changement d'état de l'appui détecté, dans un délai de préférence inférieur à 20 millisecondes.

La durée D de la vibration du premier retour haptique est de préférence, comprise entre 10 et 50 millisecondes.

Le retour acoustique est schématisé par la courbe 109, il est de préférence ponctuel et est, dans cet exemple, généré à partir de la moitié de la durée D de la vibration (à partir de l'instant 117).

Le graphique de la figure 4 représente en ordonnée, les amplitudes A des signaux de paramètres du dispositif de commande et en abscisse, le temps T.

Sur cette illustration, le dispositif de commande, initialement à l'état d'appui actif 5, bascule à l'état d'appui inactif 7 lorsque la mesure de la force de l'appui détecté (courbe 101) est inférieure à une valeur de référence schématisé par la ligne de pointillés 121.

Suite à cela (voir courbe 103, à l'instant 131), une nouvelle commande peut être prise en compte et un deuxième retour sensitif est envoyé à l'utilisateur.

Le deuxième retour sensitif est schématisé par les courbes 125, 127 et 129 de la figure 4.

La courbe 125 représente la consigne d'actionnement du vibreur à l'instant 133 et la courbe 127 schématise le retour haptique, par exemple de type vibratoire, en décalage du changement d'état d'un délai de préférence inférieur à 20 millisecondes.

La durée D de la vibration du deuxième retour sensitif est de préférence, comprise entre 10 et 50 millisecondes.

Ce deuxième retour sensitif comporte un retour acoustique (courbe 129), de préférence ponctuel, généré en décalé à la consigne de vibration, sensiblement dans la première moitié de la durée D de la vibration, par exemple à l'instant 133 ou après 0.4*D.

En outre, l'invention concerne également un dispositif de commande électrique comportant des moyens de mise en oeuvre du procédé, tels que des actionneurs aptes à générer une vibration ou tels que des moyens sonores aptes à émettre un retour acoustique.

De préférence, ces moyens comportent en outre une unité de traitement pour d'une part, la gestion des moyens de mise en oeuvre du procédé et d'autre part, pour le contrôle de la détection d'un appui et du paramètre caractéristique de l'appui détecté.

L'unité de traitement peut en outre être apte à mémoriser une valeur de référence prédéfinie et comporter en outre des moyens de comparaison du paramètre caractéristique avec la valeur de référence prédéfinie.

Avantageusement, le dispositif de commande électrique comporte un capteur ayant une surface tactile sensible à une variation de pression tactile, tel qu'un capteur de type FSR.

Alternativement, le dispositif de commande peut comporter un commutateur à surface tactile de type bouton-poussoir.

On comprend qu'un tel procédé de commande dans lequel on génère au moins un retour sensitif dont la génération d'un retour acoustique est décalé à la génération d'un retour vibratoire, produit un séquençage de la détection d'un appui permettant d'améliorer le ressenti de l'utilisateur.

## Revendications

1. Procédé de commande d'un dispositif de commande à surface tactile comprenant au moins une étape (12, 16) dans laquelle on génère un retour sensitif qui correspond à une détection d'un appui par un utilisateur sur la surface tactile et qui comporte un retour haptique et un retour acoustique, **caractérisé en ce qu'**on débute la génération du retour acoustique après celle du retour haptique, à partir du moment où une valeur caractéristique du retour haptique a franchi un seuil prédétini.

2. Procédé de commande selon la revendication 1, dans lequel le retour haptique est généré pendant une durée D, **caractérisé en ce qu'**on débute la génération du retour acoustique à partir d'une durée sensiblement comprise entre 0,4*D à 0,7*D, de préférence 0,5*D.

3. Procédé de commande selon l'une quelconque des revendications 1 ou 2, **caractérisé en ce que** l'amplitude maximale du retour haptique coïncide avec l'amplitude maximale du retour acoustique.

4. Procédé de commande d'un dispositif de commande à surface tactile selon l'une quelconque des revendications 1 à 3, **caractérisé en ce qu'**il comporte une étape de détection (3) dans laquelle :
- on contrôle la valeur d'au moins un paramètre caractéristique d'un appui (9),
- on la compare à une valeur de référence prédéfinie (11),
- si la valeur dudit paramètre est égale ou supérieure à ladite valeur de référence, alors on place le dispositif de commande dans un état d'appui actif (5) et on génère un premier retour sensitif (12).

5. Procédé de commande selon la revendication 4, dans lequel le dispositif de commande est placé dans un état d'appui actif, **caractérisé en ce que** dans l'étape de détection (3):
- on contrôle la valeur d'au moins un paramètre caractéristique de l'appui détecté (13),
- on la compare à une valeur de référence prédéfinie (15), - on place le dispositif de commande dans un état d'appui inactif (7) et on génère un deuxième retour sensitif (16), lorsque la valeur dudit paramètre est inférieure à ladite valeur de référence.

6. Procédé de commande selon l'une quelconque des revendications 4 ou 5, **caractérisé en ce que** ledit paramètre caractéristique est la force de l'appui détecté.

7. Procédé de commande selon l'une quelconque des revendications 4 à 5, **caractérisé en ce que** ledit paramètre caractéristique est la durée de l'appui détecté.

8. Procédé de commande selon l'une quelconque des revendications 4 à 7, **caractérisé en ce que** le premier et le deuxième retour sensitifs sont identiques.

9. Procédé de commande selon l'une quelconque des revendications 4 à 7, **caractérisé en ce que** dans le premier retour sensitif (12), le décalage temporel entre le retour acoustique et le retour haptique est plus grand que dans le deuxième retour sensitif (16).

10. Dispositif de commande électrique à surface tactile **caractérisé en ce qu'**il comporte des moyens de mise en oeuvre dudit procédé (1) selon l'une quelconque des revendications 1 à 9.

11. Dispositif de commande selon la revendication 10, **caractérisé en ce qu'**il comporte un capteur ayant une surface tactile sensible à une variation de pression tactile, tel qu'un capteur de type FSR.

12. Dispositif de commande selon la revendication 10, **caractérisé en ce qu'**il comporte un commutateur à surface tactile de type bouton-poussoir.

## Claims

1. Method for controlling a control device with a touch-sensitive surface comprising at least one step (12, 16) in which a sensory feedback is generated which corresponds to a detection of a user pressing on the touch-sensitive surface and which comprises a haptic feedback and an acoustic feedback, **characterized in that** the generation of the acoustic feedback is begun after that of the haptic feedback, from the moment when a value characteristic of the haptic feedback has exceeded a predefined threshold.

2. Control method according to Claim 1, wherein the haptic feedback is generated for a duration D, **characterized in that** the generation of the acoustic feedback is begun from a duration substantially between 0.4*D and 0.7*D, preferably 0.5*D.

3. Control method according to either one of Claims 1 and 2, **characterized in that** the maximum amplitude of the haptic feedback coincides with the maximum amplitude of the acoustic feedback.

4. Method for controlling a control device with a touch-sensitive surface according to any one of Claims 1 to 3, **characterized in that** it comprises a detection step (3) in which:
- the value of at least one parameter characteristic of a pressure (9) is checked,
- it is compared with a predefined reference value (11),
- if the value of said parameter is equal to or greater than said reference value, the control device is placed in an active pressure state (5) and a first sensory feedback (12) is generated.

5. Control method according to Claim 4, wherein the control device is placed in an active pressure state, **characterized in that**, in the detection step (3):
- the value of at least one parameter characteristic of the detected pressure (13) is checked,
- it is compared with a predefined reference value (15),
- the control device is placed in an inactive pressure state (7) and a second sensory feedback (16) is generated when the value of said parameter is below said reference value.

6. Control method according to either one of Claims 4 and 5, **characterized in that** said characteristic parameter is the force of the detected pressure.

7. Control method according to either one of Claims 4 and 5, **characterized in that** said characteristic parameter is the duration of the detected pressure.

8. Control method according to any one of Claims 4 to 7, **characterized in that** the first and the second sensory feedbacks are identical.

9. Control method according to any one of Claims 4 to 7, **characterized in that**, in the first sensory feedback (12), the time lag between the acoustic feedback and the haptic feedback is greater than in the second sensory feedback (16).

10. Electric control device with a touch-sensitive surface, **characterized in that** it comprises means for applying said method (1) according to any one of Claims 1 to 9.

11. Control device according to Claim 10, **characterized in that** it comprises a sensor having a touch-sensitive surface sensitive to a variation of tactile pressure, such as a sensor of the FSR type.

12. Control device according to Claim 10, **characterized in that** it comprises a switch with a touch-sensitive surface of the button type.

## Patentansprüche

1. Verfahren zum Steuern einer Steuervorrichtung mit berührungsempfindlicher Oberfläche, das wenigstens einen Schritt (12, 16) umfasst, in dem eine sensitive Rückmeldung erzeugt wird, die einer Detektion einer Abstützung durch einen Anwender auf der berührungsempfindlichen Oberfläche entspricht und die eine haptische Rückmeldung und eine akustische Rückmeldung umfasst, **dadurch gekennzeichnet, dass** mit der Erzeugung der akustischen Rückmeldung nach jener der haptischen Rückmeldung ab dem Zeitpunkt begonnen wird, zu dem ein charakteristischer Wert der haptischen Rückmeldung einen im Voraus definierten Schwellenwert übersteigt.

2. Steuerverfahren nach Anspruch 1, wobei die haptische Rückmeldung während einer Dauer D erzeugt wird, **dadurch gekennzeichnet, dass** mit der Erzeugung der akustischen Rückmeldung ab einer Dauer begonnen wird, die im Wesentlichen im Bereich von 0,4 × D bis 0,7 x D liegt und vorzugsweise 0,5 × D beträgt.

3. Steuerverfahren nach einem der Ansprüche 1 und 2, **dadurch gekennzeichnet, dass** die maximale Amplitude der haptischen Rückmeldung mit der maximalen Amplitude der akustischen Rückmeldung übereinstimmt.

4. Verfahren zum Steuern einer Steuervorrichtung mit berührungsempfindlicher Oberfläche nach einem der Ansprüche 1 bis 3, **dadurch gekennzeichnet, dass** es einen Detektionsschritt (3) umfasst, in dem:
- der Wert wenigstens eines charakteristischen Parameters einer Abstützung (9) gesteuert wird,
- dieser mit einem im Voraus definierten Referenzwert (11) verglichen wird, und
- dann, wenn der Wert des Parameters gleich oder größer als der Referenzwert ist, die Steuervorrichtung in einen aktiven Abstützzustand (5) versetzt wird und eine erste sensitive Rückmeldung erzeugt wird.

5. Steuerverfahren nach Anspruch 4, wobei die Steuervorrichtung in einen aktiven Abstützzustand versetzt wird, **dadurch gekennzeichnet, dass** in dem Detektionsschritt (3):
- der Wert wenigstens eines charakteristischen Parameters der detektierten Abstützung (13) gesteuert wird,
- dieser mit einem im Voraus definierten Referenzwert (15) verglichen wird,
- die Steuervorrichtung in einen inaktiven Abstützzustand (7) versetzt wird und eine zweite sensitive Rückmeldung (16) erzeugt wird, wenn der Wert des Parameters kleiner als der Referenzwert ist.

6. Steuerverfahren nach einem der Ansprüche 4 und 5, **dadurch gekennzeichnet, dass** der charakteristische Parameter die Kraft der detektierten Abstützung ist.

7. Steuerverfahren nach einem der Ansprüche 4 und 5, **dadurch gekennzeichnet, dass** der charakteristische Parameter die Dauer der detektierten Abstützung ist.

8. Steuerverfahren nach einem der Ansprüche 4 bis 7, **dadurch gekennzeichnet, dass** die erste und die zweite sensitive Rückmeldung gleich sind.

9. Steuerverfahren nach einem der Ansprüche 4 bis 7, **dadurch gekennzeichnet, dass** bei der ersten sensitiven Rückmeldung (12) die Zeitverzögerung zwischen der akustischen Rückmeldung und der haptischen Rückmeldung größer ist als bei der zweiten sensitiven Rückmeldung (16).

10. Elektrische Steuervorrichtung mit berührungsempfindlicher Oberfläche, **dadurch gekennzeichnet, dass** sie Mittel für die Ausführung des Verfahrens (1) nach einem der Ansprüche 1 bis 9 umfasst.

11. Steuervorrichtung nach Anspruch 10, **dadurch gekennzeichnet, dass** sie einen Sensor umfasst, der eine berührungsempfindliche Oberfläche besitzt, die für eine Veränderung des Berührungsdrucks empfindlich ist, etwa ein Sensor des FSR-Typs.

12. Steuervorrichtung nach Anspruch 10, **dadurch gekennzeichnet, dass** sie einen Kommutator mit berührungsempfindlicher Oberfläche des Drucktastentyps umfasst.
